# EUROPÄISCHE PATENTANMELDUNG

(11) **EP 4 647 410 A1**
(43) Veröffentlichungstag der Anmeldung: **12.11.2025**
(21) Anmeldenummer: 25175487.5
(22) Anmeldetag: 09.05.2025
(51) Int. Cl.: C04B 30/00

(54) **VERFAHREN ZUR VERBESSERUNG DER SPORTFUNKTIONELLEN EIGENSCHAFTEN SOWIE DER WASSERAUFNAHME VON SAND-TRETSCHICHTEN VON REITPLÄTZEN**

(30) Priorität: 10.05.2024 EP 24175216
(71) Anmelder: GFR Gesellschaft für die Aufbereitung und Verwertung von Reststoffen mbH, 97080 Würzburg (DE)
(72) Erfinder: Gerstner, Erwin, 97318 Kitzingen (DE)
(74) Vertreter: Dompatent Partnerschaft von Patent- und Rechtsanwälten mbB

(57) **Zusammenfassung**

Die Erfindung betrifft ein Verfahren zur Erstellung von Sand-Tretschichten von Reitplätzen umfassend die Schritte:
- Bereitstellen von geblähtem Perlit mit einer Schüttdichte von 40 bis 250 g/l
- Bereitstellen von Sand
- Vermischen des Sandes mit dem geblähten Perlit, um eine Mischung zu erhalten
- Auftragen der Mischung als Tretschicht.

## Beschreibung

Die vorliegende Erfindung betrifft Sand-Tretschichten von Reitplätzen.

Reitplätze haben - sowohl bei Außenreitplätzen als auch bei Hallenreitplätzen - eine Tretschicht. Die Tretschicht muss dabei gemäß üblichen Empfehlungen so angelegt sein, dass der Pferdehuf mindestens 1 cm und nicht mehr als 6 cm eindringt. Hierfür ist es üblich, dass die Stärke der Tretschicht typischerweise 5 bis 15 cm beträgt. Diese ist häufig aus Sand gefertigt.

Die Anforderungen an Tretschichten sind vielfältig. Dabei geht es nicht nur um die Eindringtiefe, sondern auch um Wasserableitung, Haltbarkeit etc.

Es ist üblich, die Eigenschaften von Sand-Tretschichten durch Zusätze, sogenannte Zuschlagstoffe zu verbessern. Neben Holzhäckseln und zerkleinerten Vliesmaterialien werden teilweise auch zerkleinerte Teppichböden etc. eingesetzt. Zuschlagstoffe wie Vlies und andere Kunststoffmaterialien sind insbesondere unter Berücksichtigung des Themas Mikroplastik bedenklich.

EP 3469890 A1 beschreibt einen Bodenhilfsstoff zur Kultivierung von Pflanzen. Reitplätze sind nicht erwähnt.

US 2005/0008793 A1 betrifft einen Kunstrasen, der auch für Reitplätze verwendet werden kann. Dort ist auch beschrieben, dass Sand-Tretschichten für Reitplätze mit Faser gefüllt werden. Im Zusammenhang mit dem Kunstrasen wird Perlit erwähnt, aber kein geblähter Perlit.

Es besteht daher Bedarf nach weiteren Materialien für Sand-Tretschichten für Reitplätze.

Gelöst wird die Aufgabe in einem Aspekt durch ein Verfahren zur Erstellung von Tretschichten von Reitplätzen umfassend die Schritte:
- Bereitstellen von geblähtem Perlit mit einer Schüttdichte von 40 bis 250 g/I
- Bereitstellen von Sand
- Vermischen des Sandes mit dem geblähten Perlit, um eine Mischung zu erhalten
- Auftragen der Mischung als Tretschicht.

Erfindungsgemäß wird also eine Tretschicht für einen Reitplatz neu hergestellt. Hierzu wird geblähter Perlit mit der angegebenen Schüttdichte mit Sand vermischt und hieraus eine Sand-Tretschicht erstellt. Die Tretschicht hat typischerweise eine Stärke von 5 bis 15 cm.

Besonders geeignet ist dabei eine Menge von 5 bis 15 l geblähtem Perlit pro m².

Bei einer mittleren Tretschichtstärke von 10 cm ergibt sich ein Tretschichtvolumen pro m² von 100 l, von dem dann 5 bis 15 % durch Perlit ersetzt sind.

Statt geblähten Perlit und Sand vorzumischen, kann auch zunächst Sand als Tretschicht aufgetragen werden und anschließend geblähter Perlit eingebracht werden. Dieses Verfahren als zweiter Aspekt der Erfindung ist insbesondere dann sinnvoll, wenn der Reitplatz mit Sand-Tretschicht bereits vorhanden ist und die Eigenschaften verbessert werden sollen. Dies ist auch möglich, wenn dort schon andere Zusatzstoffe wie Vlies oder Holzschnitzel eingearbeitet sind.

In all diesen Fällen, in denen die Tretschicht - entweder nur aus Sand oder aus Sand und Zusatzstoffen - schon vorhanden ist und egal, ob diese neu oder schon länger im Einsatz ist, umfasst das Verfahren die Schritte:
- Bereitstellen von geblähtem Perlit mit einer Schüttdichte von 40 bis 250 g/l
- Einbringen des geblähten Perlit in die Tretschicht.

Die Korngröße des geblähten Perlit liegt bevorzugt zu 90 Gew.-% < 4 mm, bevorzugt zu 90 Gew.-% < 2 mm. Bevorzugt ist der Anteil unter 0,125 mm maximal 15 Gew.-%.

Es ist grundsätzlich auch möglich, feineren geblähten Perlit einzusetzen.

Der erfindungsgemäß eingesetzte geblähte Perlit hat bevorzugt ein Wasseraufnahmevermögen von 300 bis 1.000 Ma-%, d. h. 100 g geblähter Perlit können 300 bis 1.000 g Wasser aufnehmen und binden.

Die Schüttdichte des geblähten Perlits liegt zwischen 40 und 250 g/l, bevorzugt zwischen 50 und 120 g/l.

Überraschenderweise zeigt sich, dass der geblähte Perlit nicht nur in der Lage ist, die Wasseraufnahme der Tretschicht zu verbessern, sondern auch die sportfunktionellen Eigenschaften der Tretschicht verbessert. Dies betrifft insbesondere die Scherfestigkeit, die Trittsicherheit und den Kraftabbau beim Reiten. Die Scherfestigkeit kann objektiv gemessen werden. Die anderen Werte sind teilweise subjektive, vom Reiter zu bewertende Eigenschaften, die aber für die Qualität von Reitplätzen von entscheidender Bedeutung sind.

Aufgrund dieser mechanischen Verbesserungen der Eigenschaften ist die Erfindung nicht nur für Außenreitplätze, sondern auch für Hallenreitplätze relevant.

Gegenstand der Erfindung ist daher auch die Verwendung von geblähtem Perlit zur Verbesserung der Scherfestigkeit von Tretschichten von Reitplätzen.

Weiterhin ist Gegenstand der Erfindung auch die Verwendung von geblähtem Perlit zur Verbesserung der Trittsicherheit von Tretschichten von Reitplätzen.

Gegenstand der Erfindung ist auch die Verwendung von geblähtem Perlit zur Verbesserung der Wasseraufnahme von Tretschichten von Reitplätzen.

Schließlich ist Gegenstand der Erfindung die Verwendung von geblähtem Perlit zur Verbesserung des Kraftabbaus von Tretschichten von Reitplätzen. Dieses wird auch als Auffußung der Tretschichten bezeichnet.

Gegenstand der Erfindung ist auch eine Tretschicht, die durch das erfindungsgemäße Verfahren erhältlich ist. Diese ist gekennzeichnet durch einen Gehalt an Sand und geblähtem Perlit, wobei das Perlit eine Schüttdichte von 40 bis 250 g/l aufweist. Die Eigenschaften des Perlits entsprechen den obengenannten Eigenschaften.

Bevorzugt liegt der Anteil an Sand in der Tretschicht bei mindestens 60 Vol.-%, bevorzugt bei mindestens 70 Vol.-%.

Der Perlit ist gebläht, aber bevorzugt sonst unbehandelt, insbesondere nicht mit Huminsäure. Der Huminsäuregehalt ist kleiner als 0.05 MA-%, bezogen auf den Perlit.

Ungeblähter Perlit ist ein natürlich vorkommendes vulkanisches Gestein mit einer relativ hohen Dichte (Schüttdichte typisch 900-1000 g/I).

Geblähter Perlit entsteht durch kurzes Erhitzen des ungeblähten Perlits auf 800-1000 °C. Dabei expandiert das Volumen um den Faktor 10-20. Die Schüttdichte liegt typischerweise im Bereich 40-250 g/l, häufig 50-120 g/l.

Reitplätze, die mit der erfindungsgemäßen Tretschicht versehen sind, können auch mit Beregnungsanlagen versehen sein oder sogenannte Anstauplätze sein, d.h. dass die Tretschicht regelmäßig geflutet wird.

Überraschenderweise hat sich gezeigt, dass kleinere Korngrößen der Perlite besser für die Scherfestigkeit und den Kraftabbau sind und größere Korngrößen sich im Bereich der Wasseraufnahme geeigneter verhalten.

### Beispiel 1: Bestehender Reitplatz

Eine Tretschicht auf einem Reitplatz bestand aus Sand und Vliesschnitzeln. Die Eigenschaften wurden von Reitern und Betreibern als unterdurchschnittlich empfunden.

Auf die Tretschicht wurden 10 l/qm geblähter Perlit aufgebracht. Der geblähte Perlit hatte eine Schüttdichte von 100 g/l. Die Korngröße war zu 90 Gew.-% kleiner 2 mm, es waren nur etwa 10 Gew.-% kleiner 0,125 mm.

Der Perlit wurde in die Tretschicht eingearbeitet und gewässert. Der Reitplatz war praktisch unmittelbar nach dem Ende der Bewässerung wieder bereitbar; die mechanischen Eigenschaften wurden von den Reitern und Reiterinnen deutlich besser bewertet.

Das Wasserbindevermögen von Reitsand bzw. eines Reitsand-Blähperlitgemisches wurde nach dem folgenden Verfahren bestimmt:
Zunächst wird eine handelsübliche, bei 105 °C getrocknete und verwogene Extraktionshülse, wie sie beispielsweise bei Soxhlet-Extraktionen verwendet wird, für 30 min gewässert. Anschließend lässt man die Hülse abtropfen und verwiegt sie. Aus der Gewichtsdifferenz zwischen dem Trocken- und Feuchtgewicht ergibt sich die Wasseraufnahme in Gramm exakt dieser einzelnen Hülse.

Anschließend trocknet man diese Hülse bis zur Gewichtskonstanz bei 105 °C und füllt eine bis zur Gewichtskonstanz bei 105 °C getrocknete und dann exakt ausgewogene Menge von etwa 10 - 30 g Reitsand bzw. Reitsand-Blähperlitgemisch in die Hülse ein. Die Hülse mit dem Probematerial wird anschließend wie oben für 30 min gewässert und nach dem Abtropfen verwogen.

Von diesem so ermittelten Gewicht zieht man das Gewicht der trockenen Hülse, die vorher ermittelte Wasseraufnahme der Hülse in Gramm sowie das Trockengewicht des Probenmaterials ab und erhält so die Wasseraufnahme der Probesubstanz in Gramm.

Durch Division der Wasseraufnahme der Probesubstanz durch das Trockengewicht der Probesubstanz und Multiplikation des Quotienten mit 100 erhält man das Wasserbindevermögen der Probesubstanz in Masseprozent.

Messwerte (aus dreifach Bestimmung):
Reitsand vor der Zugabe des geblähten Perlits: 26 MA.-%.
Reitsand/Perlitgemisch: 38 MA.-%

### Beispiel 2: Neuer Reitplatz

In einem Sandwerk wurden 130 m³ Quarzsand mit 13 m³ geblähtem Perlit gemischt.

Der Quarzsand entsprach den Anforderungen an Reitsande der Forschungsgesellschaft Landschaftsentwicklung Landschaftsbau e. V. (FLL).

Der geblähte Perlit hatte eine Schüttdichte von 75 g/l, die Korngröße lag zu 70 % bei < 0,1 mm.

Das Sand-Perlit-Gemisch wurde in einer Stärke von ca. 11 cm auf einen neu angelegten Reitplatz mit einer Fläche von 1.200 m² aufgebracht.

Nach dem üblichen Wässern konnte der Reitplatz praktisch sofort beritten werden, er wurde von den Reitern und Reiterinnen als hervorragend bewertet.

Messwerte (aus dreifach Bestimmung):
Reitsand (pur): 34 MA.-%
Reitsand/Perlitgemisch: 47 MA.-%

### Beispiel 3: Verbesserung der Scherfestigkeit

Mit Ausnahme der Bestimmung der Eindringtiefe des Hufes gibt es keine genormten Messmethoden für die sportfunktionellen Eigenschaften der Tretschicht.

In der gängigen Praxis wird daher für die Bestimmung der Scherfestigkeit der Tretschicht von Reitplätzen die Prüfnorm RAL-GZ 515/2 (*Werksseitig hergestellte Rasentragschichtgemische und Baustoffgemische für Drainschichten für Sportplätze; Ausgabe Juli 2013)* des RAL Deutsches Institut für Gütesicherung und Kennzeichnung e. V. herangezogen.

Gemäß dieser Prüfnorm wird die Scherfestigkeit mittels einer GEONOR Flügelsonde an einem mit einem Proctorverdichtungsgerät nach DIN 18127 hergestellten Prüfkörper bestimmt. Grundlage für die Versuchsdurchführung sind die Proctordichte ρPr und der Proctorwassergehalt wPr nach DIN EN 13286-2. Die Angabe der mit der Flügelsonde gemessenen Scherfestigkeit erfolgt in kPa.

Bei einer von einem Reitplatz genommenen Sandprobe ohne jeglichen Zuschlagstoff wurde nach diesem Verfahren eine Flügelscherfestigkeit von 9 kPa gemessen.

Bei Zugabe von 1 l geblähtem Perlit (Schüttdichte 110 g/l, Korngröße 90 Gew.-% < 2 mm, wenig Unterkorn) zu 10 l dieses Reitsandes erhöhte sich die Flügelscherfestigkeit auf 17 kPa.

Die Zunahme der Scherfestigkeit betrug 8 kPa, entsprechend etwa 90 %.

## Patentansprüche

1. Verfahren zur Erstellung von Sand-Tretschichten von Reitplätzen umfassend die Schritte:
- Bereitstellen von geblähtem Perlit mit einer Schüttdichte von 40 bis 250 g/l
- Bereitstellen von Sand
- Vermischen des Sandes mit dem geblähten Perlit, um eine Mischung zu erhalten
- Auftragen der Mischung als Tretschicht.

2. Verfahren zur Aufbereitung von Sand-Tretschichten von Reitplätzen umfassend die Schritte:
- Bereitstellen von geblähtem Perlit mit einer Schüttdichte von 40 bis 250 g/l
- Einbringen des geblähten Perlits in die Sand-Tretschicht.

3. Verfahren nach Anspruch 1 oder 2, wobei der geblähte Perlit zu 90 Gew.-% eine Korngröße < 4 mm, bevorzugt zu 90 Gew.-% < 2 mm hat.

4. Verfahren nach einem der Ansprüche 1 bis 3, wobei der geblähte Perlit ein Wasseraufnahmevermögen von 300 bis 1000 MA.-% aufweist.

5. Verfahren nach einem der vorherigen Ansprüche, wobei 5 bis 15 l geblähte Perlite pro Quadratmeter eingesetzt werden.

6. Verfahren nach einem der vorherigen Ansprüche, wobei die Stärke der Tretschicht 5 bis 15 cm beträgt.

7. Verwendung von geblähtem Perlit zur Verbesserung der Scherfestigkeit von Sand-Tretschichten von Reitplätzen.

8. Verwendung von geblähtem Perlit zur Verbesserung der Trittsicherheit von Sand-Tretschichten von Reitplätzen.

9. Verwendung von geblähtem Perlit zur Verbesserung der Wasseraufnahme von Sand-Tretschichten von Reitplätzen.

10. Verwendung von geblähtem Perlit zur Verbesserung des Kraftabbaus von Sand-Tretschichten von Reitplätzen.

11. Verwendung nach einem der Ansprüche 7 bis 10, wobei der geblähte Perlit zu 90 Gew.-% eine Korngröße< 4 mm, bevorzugt zu 90 Gew.-% < 2 mm hat.

12. Verwendung nach einem der Ansprüche 7 bis 11, wobei der geblähte Perlit ein Wasseraufnahmevermögen von 300 bis 1000 MA.-% aufweist.

13. Verwendung nach einem der Ansprüche 7 bis 12, wobei 5 bis 15 l geblähter Perlit pro Quadratmeter eingesetzt werden.

14. Verwendung nach einem der Ansprüche 7 bis 13, wobei die Stärke der Tretschicht 5 bis 15 cm beträgt.

15. Tretschicht für einen Reitplatz umfassend Sand und geblähten Perlit, wobei der Perlit eine Schüttdichte von 40 bis 250 g/l aufweist, insbesondere, wobei der Sandanteil mindestens 60 Vol.-% beträgt.
